# EUROPÄISCHE PATENTANMELDUNG

(11) **EP 2 088 096 A1**
(43) Veröffentlichungstag der Anmeldung: **12.08.2009**
(21) Anmeldenummer: 09001724.5
(22) Anmeldetag: 06.02.2009
(51) Int. Cl.: B65G 1/137, B65G 1/04, B65G 47/14, B65G 47/30

(54) **Automatisierte Einlagerungsvorrichtung für ein Apothekenlager**

(30) Priorität: 06.02.2008 DE 202008001683 U
(71) Anmelder: Beils, Dirk Rolf, 56727 Mayen (DE); Wallat, Holger Thomas, 58455 Witten (DE); Jansen, Peter, 64293 Darmstadt (DE)
(72) Erfinder: Beils, Dirk Rolf, 56727 Mayen (DE); Wallat, Holger Thomas, 58455 Witten (DE); Jansen, Peter, 64293 Darmstadt (DE)
(74) Vertreter: Isfort, Olaf

(57) **Zusammenfassung**

Die Erfindung betrifft eine automatisierte Einlagerungsvorrichtung für ein rechnergestütztes Lagersystem (1), mit einem Eingabebehälter (9), in welchen eine Mehrzahl von einzulagernden Stückgütern lose eingebbar ist, und mit einer Fördervorrichtung (10, 11), welche die Stückgüter aus dem Eingabebehälter (9) fördert und dem Lagersystem zuführt. Aufgabe der Erfindung ist es, eine automatisierte Einlagerungsvorrichtung bereitzustellen, die gegenüber dem Stand der Technik einfacher aufgebaut und damit kostengünstiger ist. Hierzu schlägt die Erfindung vor, dass die Einlagerungsvorrichtung eine geneigte Rinne (13), in welche die Stückgüter (2) mittels der Fördervorrichtung (10, 11) gefördert werden aufweist, wobei die Stückgüter (2) unter Schwerkraftwirkung in der Rinne abwärts rutschen und an deren unterem Ende auf einen Übergabetisch (14) mit im Wesentlichen horizontal ausgerichteter Oberfläche gelangen, wobei einzelne Stückgüter (2) von dem Übergabetisch (14) mittels einer dem Lagersystem (1) zugeordneten rechnergesteuerten Handhabungsvorrichtung (3) zum Zwecke der Einlagerung übernehmbar sind.

## Beschreibung

Die Erfindung betrifft eine automatisierte Einlagerungsvorrichtung für ein rechnergestütztes Lagersystem, mit einem Eingabebehälter, in welchen eine Mehrzahl von einzulagernden Stückgütern lose eingebbar ist, und mit einer Fördervorrichtung, welche die Stückgüter aus dem Eingabebehälter fördert und dem Lagersystem zuführt.

Rechnergestützte Lagersysteme zur Lagerung von Stückgütern gehören in verschiedenen Ausführungsformen zum Stand der Technik. Bei den bekannten Lagersystemen, die z. B. für die rechnergesteuerte Lagerhaltung und Kommissionierung von Arzneimitteln in Apotheken eingesetzt werden, erfolgt beim Einlagerungsvorgang zunächst eine Identifizierung der einzulagernden Arzneimittel. Nach der Identifizierung steuert der Rechner des Lagersystems eine Handhabungsvorrichtung an, welche die einzulagernden Arzneimittelpackungen einzeln ergreift, zu einer freien Lagerstelle in einem Regalfach eines Regals transportiert und dort ablegt. Der Rechner des Lagersystems speichert den Lagerort jedes eingelagerten Arzneimittels, so dass eine vollständig automatisierte Lagerhaltung verwirklicht ist. Wenn ein Benutzer des Lagersystems, beispielsweise ein Mitarbeiter einer Apotheke, ein Arzneimittel einer bestimmten Produktsorte anfordert, so ermittelt der Rechner des Lagersystems den Lagerort des gewünschten Arzneimittels und steuert die Handhabungsvorrichtung an, so dass diese entsprechend die auszulagernde Arzneimittelpackung aus dem Vorratslager entnimmt und aus dem Lagersystem heraustransportiert. Nach der Entnahme des Arzneimittels verbucht der Rechner des Lagersystems den Auslagerungsvorgang automatisch. Gleichzeitig wird die frei gewordene Lagerstelle für nachfolgend einzulagernde Arzneimittel in dem Speicher des Rechners als frei vermerkt. Insgesamt arbeitet das vorbekannte Lagersystem nach dem Prinzip der freien Lagerplatzvergabe (auch chaotische Lagerhaltung genannt). Das bedeutet, dass die Arzneimittel in dem Lager ausschließlich nach dem jeweils in dem Lager zur Verfügung stehenden Platz gelagert werden. Weitere Ordnungskriterien, beispielsweise der Produktname, werden nicht berücksichtigt. Gegenüber herkömmlichen, per Hand geführten Apothekenlagern hat ein derartiges automatisiertes Lagersystem vorteilhafterweise einen signifikant reduzierten Platzbedarf. Außerdem steht dem Apotheker mehr Zeit zur Beratung seiner Kunden zur Verfügung, da er sich nicht mit dem Heraussuchen von Arzneimitteln aus dem Lager beschäftigen muss.

Aus dem Stand der Technik sind weiterhin automatisierte Einlagerungsvorrichtungen für rechnergestützte Lagersysteme der zuvor beschriebenen Art bekannt. Eine solche Einlagerungsvorrichtung ist beispielsweise in der DE 10 2004 021 133 A1 offenbart. Die vorbekannte Einlagerungsvorrichtung umfasst einen Eingabebehälter in Form eines oben offenen Vorratsbunkers. In den Vorratsbunker können größere Mengen von Arzneimittelpackungen unsortiert lose eingeschüttet werden. Ein Förderer transportiert die Arzneimittelpackungen aus dem Vorratsbunker heraus und führt sie dem Lagersystem zu. Hierzu wirft der Förderer die Arzneimittelpackungen auf eine Ablagefläche ab. Mittels einer optischen Sensoranordnung werden sodann die Positionen der auf der Ablagefläche befindlichen Arzneimittelpackungen erfasst. Nach Maßgabe der erfassten Positionsdaten wird eine Transporteinrichtung angesteuert, welche die Arzneimittelpackungen einzeln aufnimmt und zu einer Identifizierungsstation zur Identifizierung der einzulagernden Arzneimittel transportiert. Von der Identifizierungsstation aus erfolgt dann die Einlagerung der Arzneimittelpackungen mittels der rechnergesteuerten Handhabungsvorrichtung des Lagersystems.

Die vorbekannte Einlagerungsvorrichtung ist nachteiligerweise sehr aufwendig aufgebaut und damit teuer. Besonders teure Komponenten der vorbekannten Einlagerungsvorrichtung sind die optische Sensoranordnung zur Erfassung der Positionen der auf die Ablagefläche abgeworfenen Arzneimittelpackungen sowie die auf die Ablagefläche zugreifende Transporteinrichtung zum Weitertransport der Arzneimittelpackungen zu der Identifizierungsstation des Lagersystems.

Vor diesem Hintergrund ist es Aufgabe der Erfindung, eine automatisierte Einlagerungsvorrichtung bereitzustellen, die gegenüber dem Stand der Technik einfacher aufgebaut und damit kostengünstiger ist.

Diese Aufgabe löst die Erfindung ausgehend von einer Einlagerungsvorrichtung der eingangs genannten Art dadurch, dass eine geneigte Rinne vorgesehen ist, in welche die Stückgüter mittels der Fördervorrichtung gefördert werden, wobei die Stückgüter unter Schwerkraftwirkung in der Rinne abwärts rutschen und an deren unterem Ende auf einen Übergabetisch mit im Wesentlichen horizontal ausgerichteter Oberfläche gelangen, wobei einzelne Stückgüter von dem Übergabetisch mittels einer dem Lagersystem zugeordneten rechnergesteuerten Handhabungsvorrichtung zum Zwecke der Einlagerung übernehmbar sind.

Die Fördervorrichtung und die geneigte Rinne werden bei der erfindungsgemäßen Einlagerungsvorrichtung zur Vereinzelung der lose in den Eingabebehälter eingeschütteten Arzneimittelpackungen genutzt. Die Einlagerungsvorrichtung kann so gesteuert werden, dass im Regelfall nur eine einzelne Arzneimittelpackung auf den Übergabetisch gelangt. Von dem Übergabetisch können die Arzneimittelpackungen dann problemlos mit der ohnehin vorhandenen Handhabungsvorrichtung des Lagersystems übernommen und eingelagert werden.

Die erfindungsgemäße Einlagerungsvorrichtung kommt ohne jede Positionssensorik aus, die bei dem oben beschriebenen vorbekannten System zur Erfassung der Positionen der einzelnen Arzneimittelpackungen zwingend nötig ist. Auch entfällt bei der erfindungsgemäßen Einlagerungsvorrichtung die ausschließlich dieser zugeordnete Transporteinrichtung. Gemäß der Erfindung wird lediglich die ohnehin vorhandene rechnergesteuerte Handhabungsvorrichtung des Lagersystems zur Übernahme der Stückgüter benötigt. Somit ergibt sich ein gegenüber dem Stand der Technik deutlich einfacherer und vor allem kostengünstigerer Aufbau.

Dem Übergabetisch der erfindungsgemäßen Einlagerungsvorrichtung kann eine Abwurfeinrichtung zum Abwerfen von auf dem Übergabetisch befindlichen Stückgütern zugeordnet sein. Die Handhabungsvorrichtung des Lagersystems ist, beispielsweise mittels geeigneter Sensorik, dazu in der Lage, zu registrieren, ob erfolgreich ein Stückgut von dem Übergabetisch übernommen wurde. Ergeben die Sensorsignale der Sensorik der Handhabungsvorrichtung, dass die Übernahme des Stückgutes nicht erfolgreich war, kann die Abwurfeinrichtung angesteuert werden, um das auf dem Übergabetisch befindliche Stückgut abzuwerfen. Auf diese Weise ist ein fehlertoleranter Betrieb der erfindungsgemäßen Einlagerungsvorrichtung sichergestellt. War die Handhabungsvorrichtung - aus welchen Gründen auch immer - nicht dazu in der Lage, eine Arzneimittelpackung von dem Übergabetisch zu übernehmen, so wird dies gemäß der Erfindung als Signal dafür gewertet, dass die Vereinzelung der einzulagernden Stückgüter nicht ordnungsgemäß funktioniert hat. In einem solchen Fall werden mittels der Abwurfeinrichtung die auf dem Übergabetisch befindlichen Stückgüter abgeworfen, d. h. aus dem Prozess ausgeschleust. Der Betrieb der Einlagerungsvorrichtung kann danach ungestört fortgesetzt werden. Sinnvollerweise kann ein Rückförderer vorgesehen sein, mittels welchem die abgeworfenen Stückgüter automatisch in den Eingabebehälter zurück förderbar sind. Die abgeworfenen Stückgüter können auf diese Weise beim nächsten Einlagerungszyklus automatisch eingelagert werden. Ein manueller Eingriff ist nicht erforderlich.

Eine sinnvolle Weiterbildung der erfindungsgemäßen Einlagerungsvorrichtung besteht darin, dass die Rinne an ihrem unteren Ende einen Anschlag aufweist, an welchem die Stückgüter unter Schwerkraftwirkung einzeln hintereinander zur Anlage kommen, wobei der Anschlag steuerbar ausgebildet ist, und zwar in der Weise, dass das an dem Anschlag zuvorderst anliegende Stückgut auf ein entsprechendes Steuersignal hin freigegeben wird und auf den Übergabetisch gelangt. Auf der Rinne werden die Arzneimittelpackungen unter Schwerkraftwirkung beschleunigt. Dies bewirkt eine Vereinzelung der Stückgüter. Es kann ohne weiteres vorkommen, dass mehrere Stückgüter gemeinsam oder unmittelbar nacheinander in die geneigte Rinne gefördert werden. Um in solchen Situationen sicherzustellen, dass jeweils nur ein einzelnes Stückgut auf den Übergabetisch gelangt, ist der steuerbare Anschlag vorgesehen. Die Rutschbewegung der Stückgüter in der Rinne wird durch den Anschlag gestoppt. Die hintereinander am Anschlag anliegenden Stückgüter können einzeln durch das entsprechende Steuersignal freigegeben werden und gelangen dann auf den Übergabetisch. Das nächste Stückgut wird jeweils freigegeben, nachdem die Handhabungsvorrichtung das zuletzt auf dem Übergabetisch befindliche Stückgut erfolgreich übernommen hat.

Der Übergabetisch der erfindungsgemäßen Einlagerungsvorrichtung kann einen Horizontalförderer aufweisen, mittels welchem das auf dem Übergabetisch befindliche Stückgut in horizontaler Richtung bewegbar ist. Der Horizontalförderer kann genutzt werden, um die oben beschriebene Abwurffunktion zu realisieren. Mittels des Horizontalförderers können die auf dem Übergabetisch befindlichen Stückgüter von dem Übergabetisch heruntergefördert werden, um den Übergabetisch vollständig zu leeren. Außerdem kann der Horizontalförderer dafür genutzt werden, das auf dem Übergabetisch befindliche Stückgut an die vordere Kante des Übergabetisches zu transportieren, wo das Stückgut für die Handhabungsvorrichtung des Lagersystems gut erreichbar ist und entsprechend übernommen werden kann. Dem Übergabetisch kann ein Sensormittel, beispielsweise in Form von einer oder mehreren Lichtschranken, zur Registrierung der Position des Stückgutes auf dem Übergabetisch zugeordnet sein. Der Horizontalförderer des Übergabetisches kann dann in Abhängigkeit von dem Sensorsignal des dem Übergabetisch zugeordneten Sensormittels gesteuert werden. Wird beispielsweise mittels der Sensorik der Handhabungsvorrichtung festgestellt, dass die Übernahme eines Stückgutes von dem Übergabetisch nicht erfolgreich war, und stellt gleichzeitig die Sensorik des Übergabetisches fest, dass sich noch Stückgüter auf dem Übergabetisch befinden, kann der Horizontalförderer in der Weise aktiviert werden, dass die auf dem Übergabetisch befindlichen Stückgüter abgeworfen werden. Sinnvoll ist es weiterhin, eine Ausrichtungsvorrichtung vorzusehen, welche das Stückgut mit seiner Längsachse parallel zur Förderrichtung des Horizontalförderers ausrichtet und auf dem Übergabetisch zentriert. Die Ausrichtungsvorrichtung sorgt zusammenwirkend mit dem Horizontalförderer dafür, dass sich das Stückgut an einer definierten Position mit definierter Ausrichtung auf dem Übergabetisch befindet, so dass es entsprechend von der Handhabungsvorrichtung des Lagersystems sicher übernommen werden kann. Die Ausrichtungsvorrichtung kann beispielsweise zwei über der Oberfläche des Übergabetisches quer zur Förderrichtung des Horizontalförderers zusammen- und auseinanderfahrbare Führungsbacken umfassen. Damit ist die Ausrichtungsvorrichtung in idealer Weise an die Ausgestaltung üblicher Handhabungsvorrichtungen herkömmlicher rechnergestützter Lagersysteme angepasst. Diese Handhabungsvorrichtungen umfassen einen Saugkopf, der vor und zurück beweglich ist. Mittels des Saugkopfes wird eine Arzneimittelpackung an ihrer Stirnseite angesaugt und parallel zu ihrer Längsachse bei der Handhabung bewegt.

Bei einer sinnvollen Ausgestaltung der erfindungsgemäßen Einlagerungsvorrichtung ist vorgesehen, dass die Rinne, in welche die Stückgüter mittels der Fördervorrichtung gefördert werden, um eine horizontale Drehachse motorisch verschwenkbar ist. Durch das Verschwenken wird das untere Ende der Rinne nach oben bewegt und macht auf diese Weise den Weg zum Abwurf von Stückgütern von dem Übergabetisch frei. Wenn, wie oben beschrieben, in den Übergabetisch ein Horizontalförderer integriert ist, kann der Horizontalförderer das abzuwerfende Stückgut z. B. zur Rückseite des Übergabetisches fördern, von wo es in einen geeigneten Behälter fällt. Für diesen Ablauf ist erforderlich, dass das untere Ende der Rinne, das sich normalerweise am rückseitigen Ende des Übergabetisches befindet, verschwenkt wird. Dies kann durch eine einfache Drehbewegung um eine horizontale Drehachse erreicht werden.

Besonders bevorzugt ist eine Ausgestaltung der erfindungsgemäßen Einlagerungsvorrichtung, bei welcher die Fördervorrichtung einen ersten Bandförderer und einen diesem nachgeordneten zweiten Bandförderer umfasst, wobei der erste Bandförderer die Stückgüter aus dem Eingabebehälter heraus fördert und dem zweiten Bandförderer zuführt und wobei der zweite Bandförderer die Stückgüter dann in die Rinne fördert. Außerdem kann der zweite Bandförderer wenigstens zwei Abschnitte mit unabhängig voneinander laufenden Förderbändern aufweisen. Durch eine Anordnung mehrerer Förderbänder hintereinander kann eine zuverlässige Vereinzelungsfunktionalität realisiert werden. Mittels geeigneter Sensormittel (z. B. Lichtschranken) kann registriert werden, ob und gegebenenfalls auch wo sich auf den einzelnen Förderbändern Stückgüter befinden. Registriert die Sensorik auf einem Förderbandabschnitt ein Stückgut, so können die vorangehenden Förderbandabschnitte jeweils deaktiviert werden, und zwar solange bis der jeweilige Förderbandabschnitt wieder frei ist. Das Ergebnis ist, dass jeweils nur ein einzelnes Stückgut am Ende der Fördervorrichtung ankommt und in die Rinne gefördert wird. Die Vereinzelungswirkung kann noch dadurch unterstützt werden, dass die einzelnen Förderbänder unterschiedlich schnell laufen. Eine Vereinzelung wird dadurch erzielt, dass die Fördergeschwindigkeit von Förderband zu Förderband anwächst. Hierdurch werden die Abstände zwischen den nacheinander geförderten Stückgütern sukzessiv vergrößert.

Gemäß einer bevorzugten Ausgestaltung der erfindungsgemäßen Einlagerungsvorrichtung ist vorgesehen, dass der zweite Bandförderer um seine parallel zur Förderrichtung verlaufende Längsachse geneigt ist, und zwar in der Weise, dass das auf dem zweiten Bandförderer befindliche Stückgut unter Schwerkraftwirkung an einem seitlichen Anschlag des zweiten Bandförderers zur Anlage kommt. Dadurch wird erreicht, dass zunächst nebeneinander geförderte Stückgüter auf dem zweiten Bandförderer hintereinander zu liegen kommen, da aufgrund der Schwerkraftwirkung die einzelnen Stückgüter bestrebt sind, zur tiefer gelegenen Außenseite des zweiten Bandförderers zu gelangen. Diese Wirkung kann noch dadurch unterstützt werden, dass der erste Bandförderer mit dem zweiten Bandförderer über einen zwischengeschalteten Wendelrutschenabschnitt verbunden ist. Bei einer Wendelrutsche hat die Rutschfläche einen helixartigen Verlauf. Auf die herabrutschenden Stückgüter wirken auf der Wendelrutsche Schwerkraft und Zentrifugalkraft ein. Dadurch wird eine Vereinzelungswirkung erzielt. Die Zentrifugalkraft sorgt dafür, dass die Arzneimittelpackungen beim Herabrutschen an den Außenrand der Rutsche gedrängt werden. Dadurch wird vermieden, dass mehrere Stückgüter nebeneinander die Wendelrutsche herabrutschen. So wird schließlich erreicht, dass die Stückgüter am unteren Ende der Wendelrutsche zuverlässig einzeln hintereinander auf den zweiten Bandförderer gelangen. Besonders sinnvoll ist es, eine Wendelrutsche der zuvor beschriebenen Art mit einem seitlich geneigten zweiten Bandförderer - wie oben beschrieben - zu kombinieren. Die Wahrscheinlichkeit, dass mehrere Stückgüter neben- oder übereinander die Fördervorrichtung am Ende verlassen, ist bei einer solchen Ausgestaltung äußerst gering.

Denkbar ist es, dem Übergabetisch der erfindungsgemäßen Einlagerungsvorrichtung eine Identifizierungsvorrichtung zur Identifizierung der Stückgüter zuzuordnen. Dadurch kann die Geschwindigkeit beim Einlagerungsvorgang erhöht werden, da die Handhabungsvorrichtung die von dem Übergabetisch übernommenen Stückgüter unter Umgehung einer separaten Identifizierungsvorrichtung direkt zu der vom Rechner ausgewählten Lagerstelle transportieren kann.

Ausführungsbeispiele der Erfindung werden im Folgenden anhand der Zeichnungen näher erläutert. Es zeigen:
- Fig. 1: schematische Darstellung der erfindungsgemäßen Einlagerungsvorrichtung in geschnittener Seitenansicht;
- Fig. 2: Einlagerungsvorrichtung gemäß Fig. 1 mit verschwenkter Rinne;
- Fig. 3: Schnittdarstellung A-A.

In den Figuren ist das Lagersystem insgesamt mit der Bezugsziffer 1 bezeichnet. Dieses dient zur automatischen Lagerung von verpackten Produkten 2, nämlich von Arzneimittelpackungen. Die Packungen 2 werden mittels einer rechnergesteuerten Handhabungsvorrichtung 3 beim Einlagerungsvorgang an einer Lagerstelle in einem Regalfach 4 abgelegt. Bei dem dargestellten Ausführungsbeispiel ist die Handhabungsvorrichtung 3 an einer Horizontal-Nertikalführung 5 angebracht. Mittels dieser ist die Handhabungsvorrichtung 3 zwischen zwei gegenüberliegenden Regalen 6 verfahrbar. Dabei bedient die Handhabungsvorrichtung 3 die beiden Regale 6 jeweils von deren aufeinander zuweisenden Vorderseiten her. Die Handhabungsvorrichtung 3 weist einen vor und zurück beweglichen Saugkopf 7 auf. Dieser dient dazu, die in den Regalfächern 4 gelagerten Packungen 2 anzusaugen und auf die Handhabungsvorrichtung 3 zu ziehen bzw. die Arzneimittelpackungen 2 von der Handhabungsvorrichtung 3 in die Regalfächer 4 hineinzuschieben.

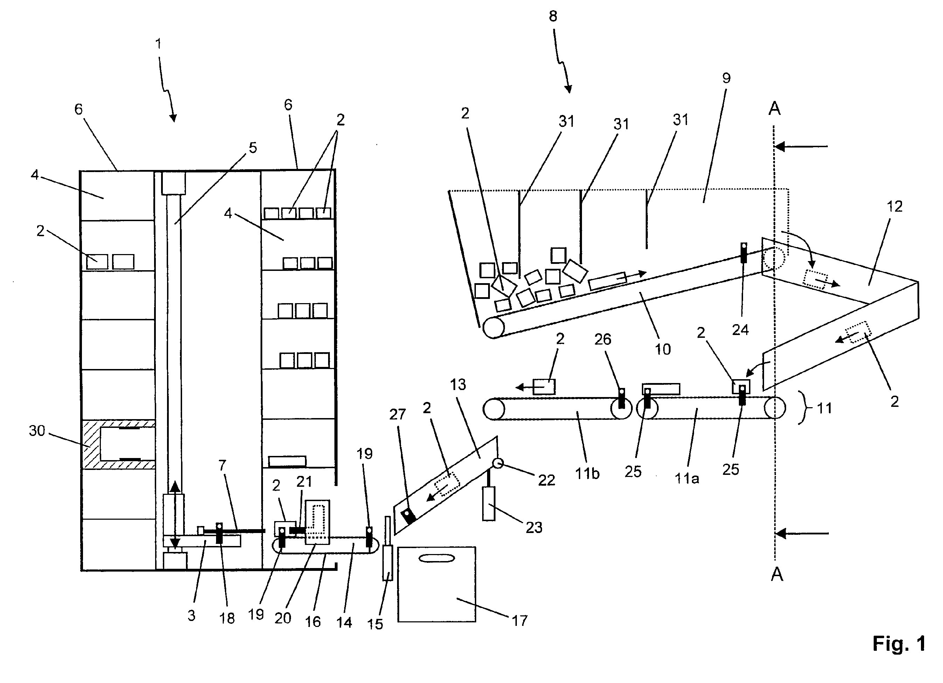

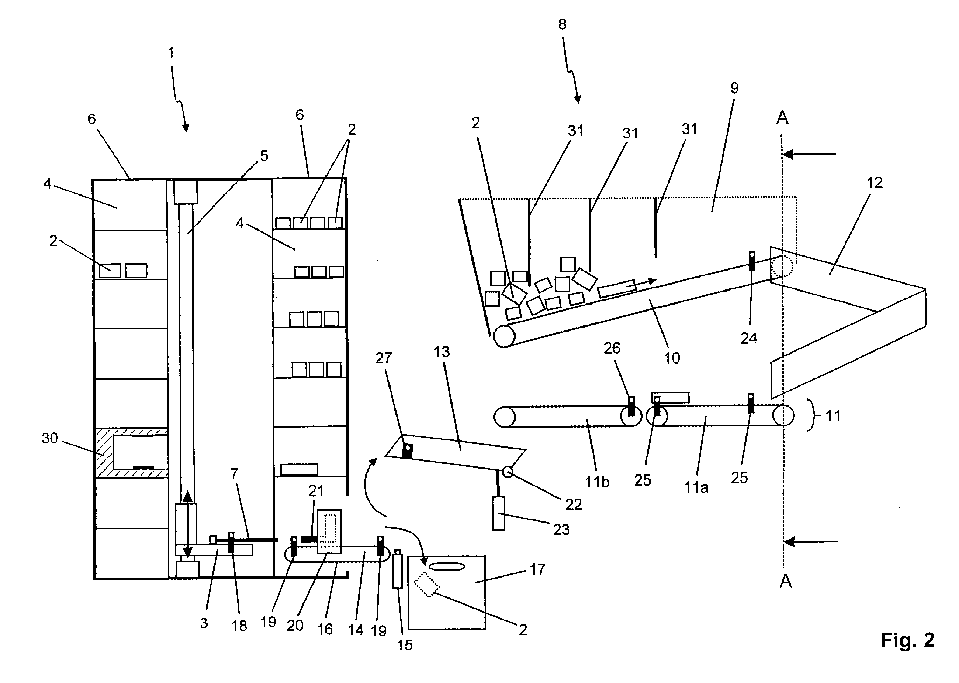

Dem Lagersystem 1 werden die einzulagernden Arzneimittelpackungen 2 mittels einer automatisierten Einlagerungsvorrichtung zugeführt, die in den Zeichnungen insgesamt mit der Bezugsziffer 8 bezeichnet ist. Die Einlagerungsvorrichtung 8 umfasst einen Eingabebehälter 9, in den die Packungen 2 durch eine obere Öffnung lose eingebbar sind. Des Weiteren ist eine Fördervorrichtung vorgesehen, welche die Packungen 2 aus dem Eingabebehälter 9 fördert und dem Lagersystem 1 zuführt. Diese Fördervorrichtung umfasst einen ersten Bandförderer 10 und einen zweiten Bandförderer 11, der in zwei Abschnitte mit unabhängigen Förderbändern 11a und 11b unterteilt ist. Die Bandförderer 10 und 11 sind über einen zwischengeschalteten Wendelrutschenabschnitt 12 miteinander verbunden. Mittels der Fördervorrichtung werden die Arzneimittelpackungen 2 in eine geneigte Rinne 13 gefördert. Die Packungen 2 rutschen, wie in der Fig. 1 dargestellt, unter Schwerkraftwirkung in der Rinne 13 abwärts. Am unteren Ende der Rinne 13 gelangen die Packungen 2 auf einen Übergabetisch 14 mit im Wesentlichen horizontal ausgerichteter Oberfläche. Mittels des Saugkopfes 3 können die Arzneimittelpackungen 2 von dem Übergabetisch 14 zum Zwecke der Einlagerung in die Regale 6 des Lagersystems 1 übernommen werden. Am unteren Ende der Rinne 13 ist ein Anschlag 15 vorgesehen, an welchem die Arzneimittelpackungen 2 unter Scherkraftwirkung, nachdem sie die Rinne 13 hinabgerutscht sind, einzeln hintereinander zur Anlage kommen. Der Anschlag ist steuerbar ausgebildet, so dass jeweils eine Arzneimittelpackung 2, nämlich die an dem Anschlag 15 zuvorderst anliegende Packung 2, auf ein entsprechendes Steuersignal hin freigegeben wird und auf den Übergabetisch 14 gelangt. Die Fig. 1 zeigt den Anschlag 15 in der ausgefahrenen Stellung. In dieser Stellung wird eine die Rinne 13 hinabrutschende Arzneimittelpackung 2 von dem Anschlag 15 gestoppt. Die Fig. 2 zeigt den Anschlag in der eingefahrenen Stellung.

Der Übergabetisch 14 weist einen Horizontalförderer 16 in Form eines Förderbandes auf, mittels welchem das auf dem Übergabetisch befindliche Stückgut in horizontaler Richtung, d. h. in den Fig. 1 und 2 nach links und rechts, bewegbar ist. Die Oberfläche des Förderbandes 16 bildet gleichzeitig die Oberfläche des Übergabetisches 14. Mittels des Förderbandes 16 kann eine auf dem Übergabetisch 14 befindliche Arzneimittelpackung 2 zum vorderen Ende des Übergabetisches 14 bewegt werden, von wo die Packung 2 mittels der Handhabungsvorrichtung 3 übernommen werden kann. Dies ist in der Fig. 1 dargestellt. Ebenso kann eine Arzneimittelpackung 2 mittels des Förderbandes 16 zur Rückseite des Übergabetisches 14 gefördert werden, von wo die Arzneimittelpackung 2 in einen bereitstehenden Behälter 17 fällt. Dies ist in der Fig. 2 darstellt. Somit bildet der in den Übergabetisch 14 integrierte Horizontalförderer 16 eine dem Übergabetisch 14 zugeordnete Abwurfeinrichtung zum Abwerfen von auf dem Übergabetisch 14 befindlichen Arzneimittelpackungen 2.

Anstelle des Behälters 17 könnte ein in den Figuren nicht dargestellter Rückförderer vorgesehen sein, mittels welchem die abgeworfenen Packungen 2 direkt in den Eingabebehälter 9 zurückgefördert werden. Bei dem dargestellten Ausführungsbeispiel muss der Behälter 17 von Zeit zu Zeit manuell in den Eingabebehälter 9 entleert werden, damit der Einlagerungsvorgang für die abgeworfenen Packungen 2 wiederholt werden kann.

Die Handhabungsvorrichtung 3 weist eine Sensorik in Form einer oder mehrerer Lichtschranken 18 auf. Die Sensorik dient zur Registrierung einer Übernahme einer Arzneimittelpackung 2 von dem Übergabetisch 14 auf die Handhabungsvorrichtung 3. Der Horizontalförderer 16 des Übergabetisches 14 wird automatisch so angesteuert, dass eine auf dem Übergabetisch 14 befindliche Arzneimittelpackung 2 in den Behälter 17 abgeworfen wird, wenn mittels der Sensorik 18 festgestellt wird, dass die Übernahme der Packung 2 von dem Übergabetisch 14 auf die Handhabungsvorrichtung 3 nicht erfolgreich war. Auch der Übergabetisch 14 weist eine entsprechende Sensorik, wiederum in Form von Lichtschranken 19 auf, die zur Registrierung der Position einer Arzneimittelpackung 2 auf dem Übergabetisch 14 dienen. Der Horizontalförderer 16 kann in Abhängigkeit von den Signalen der Lichtschranken 19 gesteuert werden, beispielsweise um eine Packung 2, die aus der Rinne 13 auf den Übergabetisch 14 gelangt, ist bis zur vorderen Kante des Übergabetisches 14 zu fördern, von wo die Packung 2 dann mittels der Handhabungsvorrichtung 3 übernommen werden kann. Außerdem können die Signale der Lichtschranken 19 beim Abwurfvorgang dazu genutzt werden, den Horizontalförderer 16 solange zu aktivieren, bis die entsprechende Arzneimittelpackung 2 von dem Übergabetisch 14 abgeworfen wurde.

Damit sich eine Arzneimittelpackung 2 zur Übernahme mittels der Handhabungsvorrichtung 3 an einer definierten Position und in einer definierten Ausrichtung an der vorderen Kante des Übergabetisches 14 befindet, ist eine Ausrichtungsvorrichtung 20 vorgesehen, welche eine auf dem Übergabetisch 14 befindliche Arzneimittelpackung mit ihrer Längsachse parallel zur Förderrichtung des Horizontalförderers 16 ausrichtet und auf dem Übergabetisch 14 zentriert. Hierzu umfasst die Ausrichtungsvorrichtung 20 zwei über der Oberfläche des Übergabetisches 14 quer zur Förderrichtung des Horizontalförderers 16 zusammen und auseinander fahrbare Führungsbacken 21. Es sind bei dem dargestellten Ausführungsbeispiel zwei seitliche Führungsbacken 21 vorgesehen, die an den seitlichen Flächen der auf dem Übergabetisch 14 befindlichen Arzneimittelpackung 2 zur Anlage kommen. In den Fig. 1 und 2 ist nur die vorne liegende Führungsbacke 21 zu erkennen.

Die Rinne 13 ist um eine horizontale Drehachse 22 verschwenkbar. Zum Verschwenken dient ein Stellmotor 23. Damit eine Arzneimittelpackung 2, wie in der Fig. 2 gezeigt, von dem Übergabetisch 14 nach rechts abgeworfen werden kann, wird die Rinne 13 nach oben verschwenkt, damit der Weg zum Abwurf der Arzneimittelpackung 2 frei ist. Im normalen Betrieb, der in der Fig. 1 dargestellt ist, befindet sich die Rinne 13 in der unteren Stellung.

Die Rinne 13 sowie die Förderbänder 10, 11a und 11b sind mit Sensoren, wiederum in Form von Lichtschranken 24, 25, 26 und 27 ausgestattet. Die einzelnen Förderbänder 10, 11a und 11b werden in Abhängigkeit von den Signalen der Lichtschranken 24, 25, 26 und 27 angesteuert. In Abhängigkeit von den Signalen der Lichtschranken 24, 25, 26 und 27 werden die Förderbänder 10, 11a und 11b aktiviert bzw. deaktiviert, oder es wird die Geschwindigkeit der einzelnen Förderbänder 10, 11a und 11b gesteuert.

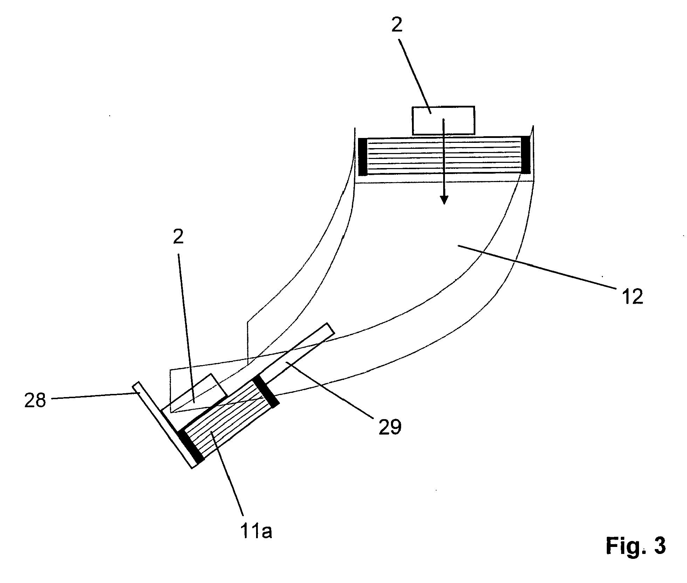

Wie in der Schnittdarstellung A-A gemäß Fig. 3 zu sehen ist, ist der zweite Bandförderer 11, der aus den Förderbandabschnitten 11a und 11b besteht, um seine parallel zur Förderrichtung verlaufende Längsachse geneigt, und zwar in der Weise, dass die auf dem zweiten Bandförderer 11 befindlichen Arzneimittelpackungen 2 unter Schwerkraftwirkung an einen seitlichen Anschlag 28 anliegen. Nur ein Teil der Oberfläche des zweiten Bandförderers 11 wird durch die Förderbänder 11a bzw. 11b gebildet. Eine Teilfläche 29 ist starr ausgebildet. Falls mehrere Arzneimittelpackungen 2 nebeneinander liegend auf den zweiten Bandförderer 11 gelangen, werden nur die an dem unteren Anschlag 28 anliegenden Packungen 2 mittels des Förderbandes 11 gefördert. Die auf dem oberen Abschnitt 29 liegenden Packungen bleiben zunächst liegen und rutschen dann zum unteren Anschlag 28 hin nach. Dadurch wird erreicht, dass beim Fördervorgang die Arzneimittelpackungen 2 zuverlässig vereinzelt werden und nacheinander in die Rinne 13 gefördert werden.

Bei dem dargestellten Ausführungsbeispiel werden die mittels der Handhabungsvorrichtung 3 von dem Übergabetisch 14 übernommenen Arzneimittelpackungen 2 einer innerhalb des Lagersystems 1 angeordneten Identifizierungsstation 30 zugeführt. Bei dieser kann es sich um einen üblichen Barcode-Scanner handeln, der den auf Arzneimittelpackungen stets vorhandenen Barcode ausliest. Nach der Identifizierung lagert die rechnergesteuerte Handhabungsvorrichtung 3 die betreffende Arzneimittelpackung 2 in einem freien Regalfach 4 ein. Alternativ kann vorgesehen sein, dass die Identifizierungsvorrichtung 30 direkt in den Übergabetisch 14 integriert ist. Bei dieser in den Figuren nicht dargestellten Variante ist vorteilhaft, dass beim Einlagerungsvorgang der Umweg über die Identifizierungsstation 30 eingespart werden kann. Dadurch wird der Einlagerungsvorgang beschleunigt.

Die in den Figuren dargestellte automatisierte Einlagerungsvorrichtung für das Lagersystem 1 funktioniert wie folgt:

Zunächst werden vom Apothekenpersonal die in einer Arzneimittellieferung enthaltenen Arzneimittelpackungen in den Eingabebehälter 9 lose von oben eingeschüttet. In dem Eingabebehälter 9 sind mehrere Trennwände 31 vorgesehen, die eine Vereinzelungsfunktion haben. Der Bandförderer 10, der gleichzeitig den Boden des Eingabebehälters 9 bildet, fördert die Arzneimittelpackungen 2 in den Fig. 1 und 2 nach rechts. Am oberen Ende des schräg nach oben geneigten Bandförderers 10 ist die Lichtschranke 24 angeordnet. Wenn mittels dieser Lichtschranke registriert wird, dass sich Arzneimittelpackungen am oberen Ende des Bandförderers 10 befinden, wird der Bandförderer 10 auf eine langsame Fördergeschwindigkeit eingestellt, so dass langsam einzelne Arzneimittelpackungen in den Wendelrutschenabschnitt 12 abgeworfen werden. In dem Wendelrutschenabschnitt 12 rutschen die Arzneimittelpackungen abwärts und kommen am unteren Ende des Wendelrutschenabschnitts 12 mehr oder minder nacheinander aufgereiht an. Dort gelangen sie auf das Förderband 11a des zweiten Bandförderers 11. Mittels der Lichtschranken 25 wird registriert, dass sich nun Arzneimittelpackungen auf dem Förderband 11a befinden. In diesem Moment wird das Förderband 10 gestoppt. Das Förderband 11a transportiert die Arzneimittelpackungen in den Fig. 1 und 2 nach links, bis die Arzneimittelpackungen 2 auf den zweiten Förderbandabschnitt 11 b des zweiten Bandförderers gelangen. Wird dies mittels der Lichtschranke 26 registriert, wird das Förderband 11a gestoppt. Von dem Förderband 11b werden die Arzneimittelpackungen schließlich in die Rinne 13 abgeworfen. Mittels der Lichtschranke 27 der Förderrinne wird registriert, dass sich nun eine Arzneimittelpackung 2 in der Förderrinne befindet. In diesem Moment wird auch das Förderband 11b gestoppt. Wenn sich keine Arzneimittelpackung auf dem Übergabetisch 14 befindet, wird nun die in der Rinne befindliche Arzneimittelpackung 2 auf den Übergabetisch abgeworfen. Hierzu gibt der Anschlag 15 die entsprechende Arzneimittelpackung 2 frei. Registriert die Lichtschranke 27, dass sich keine Arzneimittelpackung mehr in der Rinne 13 befindet, wird das Förderband 11 b wieder aktiviert, damit die nächste Arzneimittelpackung 2 in die Rinne 13 gefördert wird. Befindet sich keine Arzneimittelpackung 2 auf dem Förderbandabschnitt 11b, wird das davor liegende Förderband 11a aktiviert. Befindet sich keine Arzneimittelpackung 2 in dem Förderbandabschnitt 11a wird wiederum der erste Bandförderer 10 aktiviert, damit die nächste Arzneimittelpackung in die Wendelrutsche 12 abgeworfen wird und so auf das Förderband 11a gelangt. Durch die sukzessive Aktivierung bzw. Deaktivierung der einzelnen Förderabschnitte 10, 11a, 11b wird eine zuverlässige Vereinzelung der Arzneimittelpackungen erzielt. Idealerweise gelangt immer nur eine einzige Arzneimittelpackung 2 auf den Übergabetisch 14. Sobald sich eine Arzneimittelpackung 2 auf dem Übergabetisch 14 befindet, wird der in dem Übergabetisch 14 integrierte Horizontalförderer 16 aktiviert, bis sich die Arzneimittelpackung 2 am vorderen Ende des Übergabetisches 14, wie in der Fig. 1 gezeigt, befindet. Dann wird die Arzneimittelpackung 2 von der Handhabungsvorrichtung 3 übernommen und an einer geeigneten Lagerstelle des Lagersystems automatisch abgelegt. Der gesamte Vorgang wird solange wiederholt, bis der gesamte Eingabebehälter 9 geleert ist. Falls eine Arzneimittelpackung 2 von der Handhabungsvorrichtung 3 nicht übernommen werden kann, wird, wie oben beschrieben, mittels des Horizontalförderers 16 der Übergabetisch 14 geleert. Dabei werden die Arzneimittelpackungen 2, wie in der Fig. 2 gezeigt, in den Behälter 17 abgeworfen. Nachdem der Übergabetisch 14 geleert ist, kann der Einlagerungsvorgang ungestört fortgesetzt werden. Somit kann die Einlagerung zuverlässig erfolgen, ohne dass manuelle Eingriffe erforderlich sind.

## Patentansprüche

1. Automatisierte Einlagerungsvorrichtung für ein rechnergestütztes Lagersystem (1), mit einem Eingabebehälter (9), in welchen eine Mehrzahl von einzulagernden Stückgütern (2) lose eingebbar ist, und mit einer Fördervorrichtung (10, 11), welche die Stückgüter aus dem Eingabebehälter (9) fördert und dem Lagersystem zuführt,
**gekennzeichnet durch** eine geneigte Rinne (13), in welche die Stückgüter (2) mittels der Fördervorrichtung (10, 11) gefördert werden, wobei die Stückgüter (2) unter Schwerkraftwirkung in der Rinne abwärts rutschen und an deren unterem Ende auf einen Übergabetisch (14) mit im Wesentlichen horizontal ausgerichteter Oberfläche gelangen, wobei einzelne Stückgüter (2) von dem Übergabetisch (14) mittels einer dem Lagersystem (1) zugeordneten rechnergesteuerten Handhabungsvorrichtung (3) zum Zwecke der Einlagerung übernehmbar sind.

2. Einlagerungsvorrichtung nach Anspruch 1, **dadurch gekennzeichnet, dass** die Rinne (13) an ihrem unteren Ende einen Anschlag (15) aufweist, an welchem die Stückgüter (2) unter Schwerkraftwirkung einzeln hintereinander zur Anlage kommen, wobei der Anschlag (15) steuerbar ausgebildet ist, und zwar in der Weise, dass das an dem Anschlag (15) zuvorderst anliegende Stückgut (2) auf ein entsprechendes Steuersignal hin freigegeben wird und auf den Übergabetisch (14) gelangt.

3. Einlagerungsvorrichtung nach Anspruch 1 oder 2, **gekennzeichnet durch** eine dem Übergabetisch (14) zugeordnete Abwurfeinrichtung zum Abwerfen von auf dem Übergabetisch (14) befindlichen Stückgütern (2).

4. Einlagerungsvorrichtung nach Anspruch 3, **gekennzeichnet durch** einen Rückförderer, mittels welchem die abgeworfenen Stückgüter (2) in den Eingabebehälter (9) zurück förderbar sind.

5. Einlagerungsvorrichtung nach Anspruch 3 oder 4, **dadurch gekennzeichnet, dass** der Handhabungsvorrichtung (3) ein Sensormittel (18) zur Registrierung einer Übernahme eines Stückgutes (2) von dem Übergabetisch (14) zugeordnet ist, wobei die Abwurfeinrichtung in Abhängigkeit von dem Sensorsignal des der Handhabungsvorrichtung (3) zugeordneten Sensormittels (18) gesteuert wird.

6. Einlagerungsvorrichtung nach einem der Ansprüche 1 bis 5, **dadurch gekennzeichnet, dass** der Übergabetisch (14) einen Horizontalförderer(16) aufweist, mittels welchem das auf dem Übergabetisch (14) befindliche Stückgut in horizontaler Richtung bewegbar ist.

7. Einlagerungsvorrichtung nach Anspruch 6, **gekennzeichnet durch** ein dem Übergabetisch (14) zugeordnetes Sensormittel (19) zur Registrierung der Position des Stückgutes (2) auf dem Übergabetisch (14), wobei der Horizontalförderer (16) in Abhängigkeit von dem Sensorsignal des dem Übergabetisch (14) zugeordneten Sensormittels (19) gesteuert wird.

8. Einlagerungsvorrichtung nach Anspruch 6 oder 7, **gekennzeichnet durch** eine Ausrichtungsvorrichtung (20), welche das Stückgut (2) mit seiner Längsachse parallel zur Förderrichtung des Horizontalförderers (16) ausrichtet und auf dem Übergabetisch (14) zentriert.

9. Einlagerungsvorrichtung nach Anspruch 8, **dadurch gekennzeichnet, dass** die Ausrichtungsvorrichtung (20) zwei über der Oberfläche des Übergabetisches (14) quer zur Förderrichtung des Horizontalförderers (16) zusammen- und auseinanderfahrbare Führungsbacken (21) umfasst.

10. Einlagerungsvorrichtung nach einem der Ansprüche 1 bis 9, **dadurch gekennzeichnet, dass** die Rinne (13) um eine horizontale Drehachse (22) motorisch verschwenkbar ist.

11. Einlagerungsvorrichtung nach einem der Ansprüche 1 bis 10, **dadurch gekennzeichnet, dass** die Fördervorrichtung (10, 11) einen ersten Bandförderer (10) und einen diesem nachgeordneten zweiten Bandförderer (11) umfasst, wobei der erste Bandförderer (10) die Stückgüter (2) aus dem Eingabebehälter (9) heraus fördert und dem zweiten Bandförderer (11) zuführt und wobei der zweite Bandförderer (11) die Stückgüter dann in die Rinne (13) fördert.

12. Einlagerungsvorrichtung nach Anspruch 11, **dadurch gekennzeichnet, dass** der zweite Bandförderer (11) wenigstens zwei Abschnitte mit unabhängig voneinander laufenden Förderbändern (11a, 11 b) aufweist.

13. Einlagerungsvorrichtung nach Anspruch 12, **dadurch gekennzeichnet, dass** die Förderbänder (11a, 11b) des zweiten Bandförderers (11) unterschiedlich schnell laufen.

14. Einlagerungsvorrichtung nach einem der Ansprüche 11 bis 13, **gekennzeichnet durch** dem ersten und dem zweiten Bandförderer (10, 11) zugeordnete Sensormittel (24, 25, 26) zur Registrierung von auf dem ersten und/oder dem zweiten Bandförderer (10, 11) befindlichen Stückgütern (2).

15. Einlagerungsvorrichtung nach Anspruch 14, **dadurch gekennzeichnet, dass** der erste und/oder der zweite Bandförderer (10, 11) und/oder die Förderbänder (11a, 11 b) der Abschnitte des zweiten Bandförderers (11) in Abhängigkeit von den Sensorsignalen der dem ersten und dem zweiten Bandförderer zugeordneten Sensormittel (24, 25, 26) gesteuert werden.

16. Einlagerungsvorrichtung nach einem der Ansprüche 11 bis 15, **dadurch gekennzeichnet, dass** der zweite Bandförderer (11) um seine parallel zur Förderrichtung verlaufende Längsachse geneigt ist, und zwar in der Weise, dass das auf dem zweiten Bandförderer (11) befindliche Stückgut (2) unter Schwerkraftwirkung an einem seitlichen Anschlag (28) des zweiten Bandförderers (11) anliegt.

17. Einlagerungsvorrichtung nach einem der Ansprüche 11 bis 16, **dadurch gekennzeichnet, dass** der erste Bandförderer (10) mit dem zweiten Bandförderer (11) über einen zwischengeschalteten Wendelrutschenabschnitt (12) verbunden ist.

18. Einlagerungsvorrichtung nach einem der Ansprüche 1 bis 17, **dadurch gekennzeichnet, dass** dem Übergabetisch (14) eine Identifizierungsvorrichtung zur Identifizierung der Stückgüter (2) zugeordnet ist.
